# EUROPEAN PATENT SPECIFICATION

(11) **EP 2 287 261 B1**
(45) Date of publication and mention of the grant of the patent: **02.09.2020**
(21) Application number: 10181971.2
(22) Date of filing: 25.01.2006
(51) Int. Cl.: C09D 183/08, C08L 83/08, C09D 4/00, C09D 5/08

(54) **Method of Preparing an Aqueous Oligomeric or Polymeric Compound**
Verfahren zur Herstellung einer wässrigen oligomeren oder polymeren Verbindung
Procédé de préparation d'un composé aqueux oligomère ou polymère

(30) Priority: 25.01.2005 EP 05250368
(43) Date of publication of application: 23.02.2011
(62) Divisional of application: 06722982.3
(73) Proprietor: SIGMA COATINGS B.V., 1422 AD Uithoorn (NL)
(72) Inventor: Plehiers, Mark, B-1000, Bruxelles (NL); Van Loon, Sander, NL-1091 ZE, Amsterdam (NL)
(74) Representative: Appleyard Lees IP LLP

(56) References cited:
- EP-A- 1 721 926
- EP-A1- 1 191 075
- EP-A2- 0 716 127
- EP-A2- 0 885 895
- WO-A-00/46311
- US-A- 3 671 562
- US-A- 3 720 699
- US-A- 4 439 239

## Description

The present invention relates to a binder composition, particularly to an aqueous binder composition for use in paints or impregnation agents.

Paints may be broadly considered as comprising three ingredients: a binder, a solvent and a pigment. The binder, in general terms, is a film forming component which, together with the solvent, forms the vehicle for delivery of the pigment to a chosen substrate. It is universally accepted in the art that the choice of binder in a paint can determine many of the properties of the paint.

Decorative paints may be solvent based or waterbased; in this latter case, waterbased silane emulsions are used to protect outdoor surfaces such as concrete or facades from rain water and atmospheric damage. Paints that are used for these purposes include long lasting water repellent paints, dirt repellent paints, antigrafiti paints and the like.

Anti-corrosion paints are used in a wide variety of applications to protect the substrates from corrosion. One such paint is a so called shop primer. A shop primer or pre-construction primer is usually administered as a thin layer of protective coating to a substrate. For example, hot rolled steel for the heavy steel construction industry (such as the ship building industry) is generally blasted on-line using automated procedures and immediately coated with a thin layer of shop primer.

An effective shop primer should possess the following qualities:
Have an adequate shelf life and pot life;
Be easily sprayable, particularly in thin layers;
Dry reasonably rapidly;
Offer good corrosion protection to the substrate;
Offer good mechanical resistance;
Not interfere with the welding and cutting operations which the substrate may be subject to;
Withstand the heat and stress of the welding and cutting operations that the substrate may be subject to;
Not introduce health hazards during welding operations such as the release of noxious fumes etc.;
Offer compatability to further coatings which may be applied on top thereof, referred to as "overcoatability".

One type of binder known in the art is a silicate type binder. For example, EP-A-346385 discloses a paint composition comprising a silicate based binder, but requires the use of volatile solvents. Generally, from an environmental perspective, the use of volatile solvents in paint compositions should be avoided.

US 6,468,336, WO 02/22745 and WO 03/022940 disclose primer coatings for steel, based on water based soluble alkali silicates.

EP-A-1191075 discloses a water soluble shop primer composition having a binder comprising the reaction products of at least one omega-aminoalkyl trialkoxysilane, at least one strong acid and at least one compound having a trialkoxy or alkyldialkoxy silane and an epoxy group as terminal groups. This binder is used in a first component of a two component system, the second component comprising finely divided zinc.

Although the use of these known binders allows the composition to be water based and thus avoid the use of volatile solvents, it has been found that such primers have poor long term performance and are susceptible to blistering after the shop primer is overcoated with a paint system suitable for immersion service and immersed in water. This is a significant problem for the ship building industry.

US 3,720,699 describes protective cross-linked polysiloxane coatings for normally vulnerable substrates.

US 3,671,562 discloses urea containing silicon compounds as coupling agents on glass.

WO 00/46311 relates to a method of metal treatment comprising applying a solution containing one or more ureido silanes in admixture with one or more multi-silyl-functional silanes to a metal substrate.

EP 0,716,127 describes water-based organopolysiloxane containing compositions which are essentially free from organic solvents, have a flash point above 70°C and essentially liberate no alcohols by hydrolysis on dilution with water.

EP1721926 describes preparing a dispersion of cross-linked organopolysiloxane comprises reaction of siloxane units (I) and/or siloxane units (II) with silane compounds (III) or their hydrolyzed products, in the presence of dispersing agent, emulsifiers, optionally further materials, which are not directly involved in the reaction, and a catalyst containing a non-metal, where (I), (II) and (III) are taken in such a way that the organopolysiloxane compound is cross-linked and insoluble in toluol.

EP0885895 relates to N-[w-(methyl),w-(silyl)]alkyl-N-organocarboxamides, oligomeric and polycondensed Si-containing compounds thereof, or mixtures of the corresponding monomeric, oligomeric and polycondensed Si-containing compounds.

US4439239 describes coating compositions containing pigment in a vehicle comprising a dispersion of colloidal silica, a mixture of a hydrolyzable trialkoxysilane and a hydrolyzable dialkoxysilane, alcohol, water and sufficient acidifying agent to provide a pH of the vehicle ranging from about 2.8 to about 6.0

It is one of the objects of embodiments of the present invention to address the above mentioned problems and provide a binder composition which contains few or no volatile solvents and reduces the occurrence of blistering when overcoated and immersed in water.

According to a first aspect of the present invention there is provided a method of preparing an oligomeric or polymeric compound as claimed in the accompanying claims. There is also provided the use of an aqueous oligomeric or polymeric compound as prepared by the method of the first aspect in an aqueous paint binder composition as claimed in the accompanying claims. Further preferred features of the aspects of the present invention are disclosed hereunder.

Preferably, the binder composition is an anti-corrosion paint binder composition, more particularly an anti-corrosion primer paint binder composition.

Preferably, the binder composition is a decorative paint binder composition. Preferably, the binder composition is a protective paint binder composition. Alternatively, the binder composition is a water repellent impregnation agent binder composition, preferably for textile or wall use.

During the polymerization process, monomers of general formula **I** and of general formula **II** (if present) polymerize i.e. hydrolyse and the silanols, hydrocarbyloxy or acetoxy silanes condense and release alcohol, R³³COOH, R³⁴COOH or water. The alcohol, R³³COOH, R³⁴COOH or water may be separated, usually distilled out of the reaction mixture to leave the polymer product generally with a [-O-Si-O-Si-] backbone. Accordingly, R¹ (and R⁸ if present) should be chosen to be any suitable moiety which allows this polymerization to proceed at an advantageous rate taking into account factors such as the chemical properties of R¹ (and R⁸) as well as steric properties. By chemical properties it is meant not only the potential of Si-OR¹ (Si-OR⁸) to undergo hydrolysis and therefore polymerize and liberate alcohol, R³³COOH, R³⁴COOH or water, but also consideration should be given to other chemicals present in the reaction system and an R¹ (R⁸) group should be chosen which does not preferentially react with these other groups under the reaction conditions, thus avoiding polymerization.

Preferably, R¹ is chosen such that R¹O- is a good leaving group. By the term good leaving group, it is meant that the R¹O- group has good energetic stability when it has departed from the silicon atom to which it was bound.

Preferably, R⁸ is chosen such that R⁸O- is a good leaving group. By the term good leaving group, it is meant that the R⁸O- group has good energetic stability when it has departed from the silicon atom to which it was bound.

Molecules having a pKa of less than or equal to 16, more preferably, less than or equal to 15, most preferably less than or equal to 14 (measured in H₂O at 298K) may be considered as good leaving groups.

Preferably, R^{X} and/or R^{Y} is any C₁ to C₁₀ bivalent organic bridging group.

Preferably, R^{X} and/or R^{Y} is independently selected from any alkylene, alkenylene, alkynylene, aralkylene or arylene group, or any combination thereof.

By the term at least one nitrogen radical within the group -NR²R³ is directly bonded to an R^{Z} group, it should be understood that the said at least one nitrogen radical referred to may not only be the -NR²R³ radical, but may alternatively or additionally be present in the R² group, the R³ group, or both. For example, if R² or R³ are selected as -R^{y}-NR^{v}R^{w}, then the at least one nitrogen radical referred to may be -R^{y}-NR^{v}R^{w} radical in the first or a succeeding -R^{Y}-NR^{V}R^{W} group.

For the avoidance of doubt, where R^{Z} is the cyclic fragment of formula **VI**, -C(O)R³²-, it is meant that one or more of the R² and R³ or R^{V} and R^{W} have together formed a cyclic group such that the groups -NR²R³ or -NR^{V}R^{W} may independently be represented by the formula **VI,** thus, in such a scenario, at least one of the at least one nitrogen radical within the group -NR²R³ being directly bonded to the group R^{Z} may be represented by formula **VI.**

The term "alk" or "alkyl", as used herein unless otherwise defined, relates to saturated hydrocarbon radicals being straight, branched, cyclic or polycyclic moieties or combinations thereof and contain 1 to 20 carbon atoms, preferably 1 to 10 carbon atoms, more preferably 1 to 8 carbon atoms, still more preferably 1 to 6 carbon atoms, yet more preferably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, preferably up to 4, double bonds, being straight, branched, cyclic or polycyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH₂, becomes ethenylene, -CH=CH-, when represented as an alkenylene. Other alkenylene groups should be understood accordingly.

The term "alkynyl", as used herein, relates to hydrocarbon radicals having one or several, preferably up to 4, triple bonds, being straight, branched, cyclic or polycyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or lower alkyl, and/or be interrupted by one or more oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

The term "aralkyl" as used herein, relates to a group of the formula alkyl-aryl, in which alkyl and aryl have the same meaning as defined above and may be attached to an adjacent radical via the alkyl or aryl part thereof. Examples of such radicals may be independently selected from benzyl, phenethyl, dibenzylmethyl, methylphenylmethyl, 3- (2-naphthyl)-butyl, and the like. The term "aralkylene", as used herein, relates to a bivalent radical aralkyl group as defined above. For example, an aralkyl group such as benzyl which would be represented as -Bn, becomes benzylene, -Bn-, when represented as an aralkylene. Other aralkylene groups should be understood accordingly.

The term "Het", when used herein, includes four-to-twelve-membered, preferably four-to-ten-membered ring systems, which rings contain one or more heteroatoms selected from nitrogen, oxygen, sulphur and mixtures thereof, and which rings may contain one or more double bonds or be nonaromatic, partly aromatic or wholly aromatic in character. The ring systems may be monocyclic, bicyclic or fused. Each "Het" group identified herein is optionally substituted by one or more substituents selected from halo, cyano, nitro, oxo, lower alkyl (which alkyl group may itself be optionally substituted or terminated as defined below) OR¹⁹, OC(O)R²⁰, C(O)R²¹, C(O)OR²², NR²³R²⁴, C(O)NR²⁵R²⁶, SR²⁷, C(O)SR²⁷ or C(S)NR²⁵R²⁶ wherein R¹⁹ to R²⁷ each independently represent hydrogen, aryl or lower alkyl (which alkyl group itself may be optionally substituted or terminated as defined below). The term "Het" thus includes groups such as optionally substituted azetidinyl, pyrrolidinyl, imidazolyl, indolyl, furanyl, oxazolyl, isoxazolyl, oxadiazolyl, thiazolyl, thiadiazolyl, triazolyl, oxatriazolyl, thiatriazolyl, pyridazinyl, morpholinyl, pyrimidinyl, pyrazinyl, quinolinyl, isoquinolinyl, piperidinyl, pyrazolyl and piperazinyl. Substitution at Het may be at a carbon atom of the Het ring or, where appropriate, at one or more of the heteroatoms.

"Het" groups may also be in the form of an N oxide.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

Preferably, each R¹ group is independently selected from hydrogen or any C₁ to C₆ alkyl group.

Examples of suitable R¹ groups include hydrogen, methyl, ethyl, propyl, iso-propyl, butyl, iso-butyl, sec-butyl, tert-butyl, pentyl, 2-methyl-pentyl, 3-methyl-pentyl, 4-methyl-pentyl, cyclopentyl, methyl-cyclopentyl, hexyl, cyclohexyl, formyl, acetyl, propionyl, butyryl, trifluoroacetyl. Preferably, each R¹ group is independently selected from hydrogen or any C₁ to C₄ alkyl group. More preferably, each R¹ is independently selected from hydrogen, methyl, ethyl, propyl or butyl groups. Most preferably, each R¹ is either a methyl group or an ethyl group.

Preferably, at least one of the groups R² or R³ is an R^{Z} group.

Preferably, each R⁴ group is independently selected from any of: hydrogen, methyl, ethyl, propyl, iso-propyl, butyl, iso-butyl, sec-butyl or tertiary butyl group. In a particularly preferred embodiment, each R⁴ group is independently selected from hydrogen, methyl or ethyl.

Preferably, each R³³ group is independently selected from any of: hydrogen, methyl, ethyl, propyl, iso-propyl, butyl, iso-butyl, sec-butyl or tertiary butyl group. In a particularly preferred embodiment, each R³³ group is independently selected from hydrogen, methyl or ethyl.

Preferably, each R³⁴ group is independently selected from any of: hydrogen, methyl, ethyl, propyl, iso-propyl, butyl, iso-butyl, sec-butyl or tertiary butyl group. In a particularly preferred embodiment, each R³⁴ group is independently selected from hydrogen, methyl or ethyl. Preferably, each R⁵ group is independently selected from any C₁ to C₄ alkyl group or C₆ to C₁₀ aryl group.

Most preferably, each R⁵ group is independently selected from any of: methyl, ethyl, propyl, iso-propyl, butyl, iso-butyl, sec-butyl, tertiary butyl, phenyl or benzyl groups. In a particularly preferred embodiment, each R⁵ group is independently selected from methyl or ethyl.

Preferably, each R^{z} group is independently selected from -(C=O)R⁴.

Preferably, each R³ group is independently selected from hydrogen, methyl, ethyl, propyl, iso-propyl, butyl, iso-butyl, sec-butyl, tert-butyl, -(CH₂)ₚN[(C=O)H]R^{W},-(CH₂)ₚN[(C=O)CH₃]R^{W}, -(CH₂)ₚN[(C=O)CH₂CH₃]R^{W},-(CH₂)ₚNH[(C=O)H], -(CH₂)ₚNH[(C=O)CH₃],-(CH₂)ₚNH[(C=O)CH₂CH₃], -(CH₂)ₚN[(C=O)H]CH₃,-(CH₂)ₚN[(C=O)CH₃]CH₃, where p may equal 1, 2, 3 or 4. Preferably, p=1, 2 or 3, more preferably p = 2 or 3. In a particularly preferred embodiment p = 2.

In a particularly preferred embodiment, each R³ group is selected from hydrogen, methyl, ethyl, propyl,-(CH₂)ₚN[(C=O)H]R^{W}, -(CH₂)ₚN[(C=O)CH₃]R^{W}, -(CH₂)ₚNH[(C=O)H] or -(CH₂)ₚNH[(C=O)CH₃], where p is as defined above.

Preferably, each R⁸ group is independently selected from hydrogen, or any C₁ to C₆ alkyl group. Examples of suitable R⁸ groups include but are not restricted to hydrogen, methyl, ethyl, propyl, iso-propyl, butyl, iso-butyl, 2 methyl butyl, 3 methyl butyl, tertiary butyl, pentyl, 2 methyl pentyl, 3 methyl pentyl, 4 methyl pentyl, cyclopentyl, methyl cyclopentyl, hexyl, cyclohexyl. More preferably, each R⁸ group is independently selected from hydrogen or any C₁ to C₄ alkyl group. More preferably, each R⁸ group is independently selected from hydrogen, methyl, ethyl, propyl or butyl groups or branched variants thereof. Most preferably, each R⁸ is either a methyl group or an ethyl group.

Examples of suitable R⁹ groups include but are not restricted to: hydrogen, methyl, ethyl, propyl, iso-propyl, butyl, isobutyl, tert-butyl, pentyl, cyclopentyl, hexyl, cyclohexyl, heptyl, octyl, vinyl, phenyl, 3-glycidyloxypropyl, 3,4-epoxycyclohexyl-ethyl, 3-methacryloyloxypropyl, acetoxy ethyl, acetoxy methyl, mercaptopropyl.

In an alternative embodiment, each R⁴ group may be independently selected from hydrogen or any alkyl, alkenyl, alkynyl, aralykyl, aryl or any group having the general formula **V:** 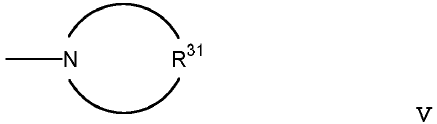 where R³¹ is defined as for R^{X} above.

Preferably, each R³¹ is independently selected from any C₃ to C₆ alkylene group. Preferably, each R³¹ is independently selected from any C₄ or C₅ alkylene group. Examples of suitable R³¹ groups include but are not restricted to propylene, butylene, pentylene and hexylene.

Examples of suitable groups having the formula **V** include but are not restricted to piperidine and pyrollidine.

Preferably, each R⁶ group is independently selected from any of: hydrogen, methyl, ethyl, propyl, iso-propyl, butyl, iso-butyl, sec-butyl or tertiary butyl group. In a particularly preferred embodiment, each R⁶ group is independently selected from hydrogen, methyl or ethyl.

Preferably, each R⁷ group is independently selected from any of: hydrogen, methyl, ethyl, propyl, iso-propyl, butyl, iso-butyl, sec-butyl or tertiary butyl group. In a particularly preferred embodiment, each R⁷ group is independently selected from hydrogen, methyl or ethyl.

Preferably, if R⁶ is selected as a hydrogen group, then R⁷ is independently selected from alkyl, alkenyl, alkynyl, aralkyl or an aryl group.

Preferably, each R⁷ group is independently selected from any C₁ to C₆ alkyl or alkenyl group.

Therefore, in the further alternative embodiment, examples of preferred R^{z} groups include but are not restricted to-(C=O)-NHCH₃, -(C=O)-NHCH₂CH₃, -(C=O)-NHCH(CH₃)CH₃, -(C=O)-NHCH₂CH(CH₃)CH₃, -(C=O)-NHC(CH₃)₃, -(C=O)-N(CH2CH₃)₂, -(C=O)-N(CH₃)₂, -(C=O)-N(iPr)₂, -(C=O)-N(CH₂)₃CH₂, -(C=O)-N(CH₂)₄CH₂. Preferably, each R³² is independently selected from any C₂ to C₅ alkylene group. Preferably, each R³² is independently selected from any C₃ or C₄ alkylene group.

Examples of suitable R³² groups include but are not restricted to ethylene, propylene, butylene and pentylene.

Preferably, m = 2 or 3. Most preferably, m = 3.

Preferably, q = 2, 3 or 4. More preferably, q = 2 or 3. In a most preferred embodiment, q = 3.

In another preferred embodiment, q = 4.

Preferably, each R^{V} and R^{W} are independently chosen such that the group -R^{Y}-NR^{V}R^{W} is repeated no more than 5 times between the silicon radical of general formula I and each terminal -R^{Y}-NR^{V}R^{W} group.

Preferably, each R^{V} and R^{W} are independently chosen such that the group -R^{Y}-NR^{V}R^{W} is repeated no more than 4 times between the silicon radical of general formula **I** and each terminal -R^{Y}-NR^{V}R^{W} group.

Preferably, each R^{V} and R^{W} are independently chosen such that the group -R^{Y}-NR^{V}R^{W} is repeated no more than 3 times between the silicon radical of general formula **I** and each terminal -R^{Y}-NR^{V}R^{W} group.

Preferably, the monomer of general formula **I** contains less than 15 nitrogen radicals, more preferably, less than 12 nitrogen radicals, more preferably less than 10 nitrogen radicals, most preferably, less than 8 nitrogen radicals. Examples of suitable compounds having general structure **I** that may be used include, but are not restricted to, any of the following: N-[3-(trimethoxysilyl)propyl]-formamide (CAS RN:[88542-71-6]), N-[3-(triethoxysilyl)propyl]-formamide (CAS RN:[76524-94-2]), N-[2-(formylamino)ethyl]-N-[3-(triethoxysilyl)propyl] -formamide (CAS RN:[112096-22-7]), N-[2-(formylamino)ethyl]-N-[3-(trimethoxysilyl)propyl]-formamide (CAS RN: [112119-91-2]), N-[2-(formylamino)ethyl]-N-[2-formyl[3-(triethoxysilyl)propyl]amino]ethyl]-formamide, N-[3-(triethoxysilyl)propyl]-acetamide (CAS RN:[17053-34-8], N-[3-(trimethoxysilyl)propyl]-acetamide: (CAS RN: [57757-66-1]), N-[2-(acetylamino)ethyl]-N-[3-(trimethoxysilyl)propyl]-acetamide (CAS RN: [28353-43-5]), 3-ureidopropyl-trimethoxysilane (CAS RN: [23843-64-3]).

Examples of suitable compounds having general structure **II** that may be used include, but are not restricted to, any of the following: methyltriethoxysilane (CAS RN: [2031-67-6]), dimethyldimethoxysilane (CAS RN: [1112-39-6]), hexyltriethoxysilane (CAS RN: [18166-37-5]), octyltriethoxysilane (CAS RN: [2943-75-1]), phenyltrimethoxysilane (CAS RN: [2996-92-1]), 3-(glycidyloxypropyl)-trimethoxysilane (CAS RN: [2530-83-8]), 3-(glycidyloxypropyl)-triethoxysilane (CAS RN: [2602-34-8]), 3-(glycidyloxypropyl)-methyldiethoxysilane (CAS RN: [2897-60-1], 2-(3,4-epoxycyclohexyl)-ethyltrimethoxysilane (CAS RN: [3388-04-3]), 2-(3,4-epoxycyclohexyl)-ethyltriethoxysilane (CAS RN: [10217-34-2]), Vinyltrimethoxysilane (CAS RN: [2768-02-7]), vinyltriethoxysilane (CAS RN: [78.08-0]), vinylmethyldimethoxysilane (CAS RN: [16753-62-1], 3-(methacryloyloxypropyl)-trimethoxysilane (CAS RN: [2530-85-0]), 3-(methacryloyloxypropyl)-triethoxysilane (CAS RN: [21142-229-0]), 3-(methacryloyloxypropyl)-methyldiethoxysilane (CAS RN: [65100-04-1]), 3-(acryloyloxypropyl)-triethoxysilane (CAS RN: [21142-29-0]), tetraethoxysilane (CAS RN: [78-10-4]), tetramethoxysilane (CAS RN: [681-84-5]), acetoxymethyltriethoxysilane (CAS RN: 5630-83-1), 3-mercaptopropyltriethoxysilane (CAS RN: 14814-09-6).

Preferably, the oligomeric or polymeric substance is derived from at least one monomer of the general formula I wherein the at least one monomer of general formula I is at least 1% by weight of the total monomer used to produce the oligomeric or polymeric substance, more preferably, at least 5% by weight, more preferably, at least 10% by weight.

Preferably, the oligomeric or polymeric substance is formed from at least one monomer of the general formula I which comprises at least one N-formyl group.

Preferably, the oligomeric or polymeric substance is formed from at least one monomer of the general formula **I** and one monomer, more preferably at least two monomers of the general formula **II.**

More preferably, the oligomeric or polymeric substance is formed from at least one monomer of the general formula **I** which comprises an N-formyl group and at least one monomer, more preferably at least two monomers of the general formula **II.** Preferably, the oligomeric or polymeric substance is formed from at least one monomer of general formula **I** which comprises an N-formyl group in an amount 1 to 99% w/w, more preferably 5 to 80% w/w, more preferably 10 to 50% w/w, more preferably 15 to 30% w/w, most preferably 15 to 25% w/w of the total monomer used to produce the oligomeric or polymeric substance.

More preferably, the oligomeric or polymeric substance is formed from at least one monomer of the general formula **I** which at least monomer of the general formula **I** comprises an N-formyl group and at least two monomers of the general formula **II,** one of the at least two monomers of the general formula **II** having q = 4. Preferably, the oligomeric or polymeric substance is formed from one of the at least two monomers of the general formula **II** having q = 4 in an amount 1 to 99% w/w, more preferably, 10 to 90% w/w, more preferably, 20 to 80% w/w, more preferably, 40 to 80% w/w, more preferably, 50 to 70% w/w, most preferably 55 to 65% w/w of the total monomer used to produce the oligomeric or polymeric substance.

Most preferably, the oligomeric or polymeric substance is formed from at least one monomer of the general formula **I** which at least one monomer of the general formula **I** comprises an N-formyl group, and at least two monomers of the general formula **II,** one of the at least two monomers of general formula **II** having q = 4, and a second of the at least two monomers of the general formula **II** comprising an epoxy terminal group. Preferably, the oligomeric or polymeric substance is formed from the second of the at least two monomers of the general formula II comprising an epoxy terminal group in an amount 1 to 99% w/w, more preferably 5 to 80% w/w, more preferably 10 to 50% w/w, more preferably 15 to 30% w/w, most preferably 15 to 25% w/w of the total monomer used to produce the oligomeric or polymeric substance.

Preferably, the ratio by weight of the at least one monomer of general formula I:the at least one monomer of general formula II is in the range 1:0.1 to 1:10, more preferably, in the range 1:0.5 to 1:10, more preferably, 1:1 to 1:8, more preferably 1:2 to 1:6, more preferably 1:3 to 1:5, more preferably, 2:7 to 2:9 and most preferably, about 1:4 in the oligomeric or polymeric substance.

In a particularly preferred embodiment, the oligomeric or polymeric substance is formed from at least one monomer of the general formula **I** which at least one monomer of the general formula **I** comprises an N-formyl group, and at least two monomers of the general formula **II,** one of the at least two monomers of general formula **II** having q = 4, and a second of the at least two monomers of the general formula **II** comprising an epoxy terminal group where the ratio (by weight) of the at least one monomer of the general formula **I** comprises an N-formyl group: one of the at least two monomers of general formula **II** having q = 4: a second of the at least two monomers of the general formula **II** comprising an epoxy terminal group is preferably in the range 5 to 60:15 to 90: 5 to 60, more preferably in the range 10 to 35:30 to 80:10 to 35, more preferably in the range 10 to 30:40 to 80: 10 to 30, yet more preferably in the range 15 to 25: 50 to 70: 15 to 25 and in a particularly preferred embodiment, the ratio is approximately 20:60:20.

In a particularly preferred embodiment, the oligomeric or polymeric substance is formed from at least one monomer of the general formula **I** which at least one monomer of the general formula **I** comprises an N-formyl group, and at least one monomer of the general formula **II,** which at least one monomer of the general formula **II** has q = 4 where the ratio (by weight) of the at least one monomer of the general formula **I** comprising an N-formyl group:the at least one monomer of the general formula **II** having q = 4 is preferably 1:0.1 to 1:50, more preferably, 1:0.5 to 1:10, more preferably 1:1 to 1:8 more preferably 1:2 to 1:4, most preferably about 1:3.

In a particularly preferred embodiment, the oligomeric or polymeric substance is formed from at least one monomer of the general formula **I** which at least one monomer of the general formula **I** comprises an N-formyl group, and at least one monomer of the general formula **II,** which at least one monomer of the general formula **II** has a terminal epoxy group where the ratio (by weight) of the at least one monomer of the general formula **I** comprising an N-formyl group:the at least one monomer of the general formula **II** having a terminal epoxy group is preferably 1:0.05 to 1:50, more preferably, 1:0.1 to 1:10, more preferably 1:0.5 to 1:5 more preferably 1:0.7 to 1:2, most preferably about 1:1.

In a particularly preferred embodiment, the oligomeric or polymeric substance is formed from at least two monomers of the general formula **II,** at least a first of the at least two monomers of the general formula **II** having q = 4, and at least a second of the at least two monomers of the general formula **II** having an epoxy terminal group where the ratio (by weight) of the first of the at least two monomers of the general formula **II** having q = 4:the second of the at least two monomers of the general formula **II** having an epoxy terminal group is preferably 1:0.1 to 1:50, more preferably, 1:0.5 to 1:10, more preferably 1:1 to 1:8 more preferably 1:2 to 1:4, most preferably about 1:3.

Preferably, the oligomeric or polymeric substance is formed from 0.1 to 100% (by weight of the total monomer used to produce the oligomeric or polymeric substance) of at least one monomer of the general formula **I.** Preferably, the oligomeric or polymeric substance is formed from 1 to 100% (by weight of the total monomer used to produce the oligomeric or polymeric substance) of at least one monomer of the general formula **I.** Preferably, the oligomeric or polymeric substance is formed from 5 to 100% (by weight of the total monomer used to produce the oligomeric or polymeric substance) of at least one monomer of the general formula **I.** Preferably, the oligomeric or polymeric substance is formed from 6 to 100% (by weight of the total monomer used to produce the oligomeric or polymeric substance) of at least one monomer of the general formula **I.** Preferably, the oligomeric or polymeric substance is formed from 0.1 to 99.9% (by weight of the total monomer used to produce the oligomeric or polymeric substance) of at least one monomer of the general formula **I.** Preferably, the oligomeric or polymeric substance is formed from 1 to 99% (by weight of the total monomer used to produce the oligomeric or polymeric substance) of at least one monomer of the general formula **I.** Preferably, the oligomeric or polymeric substance is formed from 10 to 70% (by weight of the total monomer used to produce the oligomeric or polymeric substance) of at least one monomer of the general formula **I.** Preferably, the oligomeric or polymeric substance is formed from 15 to 60% (by weight of the total monomer used to produce the oligomeric or polymeric substance) of at least one monomer of the general formula **I.** Preferably, the oligomeric or polymeric substance is formed from 15 to 40% (by weight of the total monomer used to produce the oligomeric or polymeric substance) of at least one monomer of the general formula **I.** Preferably, the oligomeric or polymeric substance is formed from 15 to 30% (by weight of the total monomer used to produce the oligomeric or polymeric substance) of at least one monomer of the general formula **I.** Preferably, the oligomeric or polymeric substance is formed from 15 to 25% (by weight of the total monomer used to produce the oligomeric or polymeric substance) of at least one monomer of the general formula **I.**

Preferably, the oligomeric or polymeric substance is further formed from 1 to 99% (by weight of the total monomer used to produce the oligomeric or polymeric substance) of at least one monomer of general formula **II.** Preferably, the oligomeric or polymeric substance is further formed from 5 to 90% (by weight of the total monomer used to produce the oligomeric or polymeric substance) of at least one monomer of general formula **II.** Preferably, the oligomeric or polymeric substance is further formed from 10 to 90% (by weight of the total monomer used to produce the oligomeric or polymeric substance) of at least one monomer of general formula **II.** Preferably, the oligomeric or polymeric substance is further formed from 30 to 90% (by weight of the total monomer used to produce the oligomeric or polymeric substance) of at least one monomer of general formula **II.** Preferably, the oligomeric or polymeric substance is further formed from 50 to 90% (by weight of the total monomer used to produce the oligomeric or polymeric substance) of at least one monomer of general formula **II.** Preferably, the oligomeric or polymeric substance is further formed from 60 to 90% (by weight of the total monomer used to produce the oligomeric or polymeric substance) of at least one monomer of general formula **II.** Preferably, the oligomeric or polymeric substance is further formed from 75 to 85% (by weight of the total monomer used to produce the oligomeric or polymeric substance) of at least one monomer of general formula **II.**

Preferably, the oligomeric or polymeric substance is further formed from at least two monomers having general formula **II.** Preferably, the oligomeric or polymeric substance is formed from a first of the at least two monomers of general formula **II** in an amount 50 to 90 (by weight of the total monomer used to produce the oligomeric or polymeric substance) and from 10 to 30% (by weight of the total monomer used to produce the oligomeric or polymeric substance) of a second of the at least two monomers having general formula **II.**

Preferably, the oligomeric or polymeric substance is present in the aqueous binder composition between 1% and 99 %, more preferably between 1% and 70% by dry weight of the binder composition. Preferably, the oligomeric or polymeric substance is present in the aqueous binder composition between 6 and 60% by dry weight of the binder composition. More preferably, the oligomeric or polymeric substance is present in the aqueous binder composition in an amount between 6% and 50% by dry weight of the binder composition, more preferably, the oligomeric or polymeric substance is present in the aqueous binder composition in an amount between 8% and 40% by dry weight of the binder composition, most preferably, the oligomeric or polymeric substance is present in the aqueous binder composition in an amount between 10% and 30% by dry weight of the binder composition.

Preferably, the released alcohol, R³³COOH, R³⁴COOH and/or water may be removed by any method, such as, for example, distillation.

Preferably, the R¹O- removal agent comprises water. Preferably, the R¹O- removal agent further comprises at least one alcohol. Preferably, the R¹O- removal agent comprises a mixture of water and at least one alcohol. Preferably, the at least one alcohol has a boiling point of less than 100°C (measured at 10⁵ Pa pressure). Preferably, the at least one alcohol is any C₁ to C₈ alcohol. Preferably, the at least one alcohol is any C₁ to C₆ alcohol. Examples of suitable at least one alcohol include but are not restricted to methanol, ethanol, isopropanol, butanol and the like. Preferably, the at least one alcohol is added together with the at least one monomer of the general formula **I** and the at least a second monomer having the general formula **II,** or alternatively, an at least one alcohol/water mixture may be added to the at least one monomer of the general formula **I** and the at least a second monomer having the general formula **II.** Preferably, the at least one alcohol is present in the reaction mixture in an amount between 1 to 40% by weight of the total weight of the at least one monomer of the general formula **I** and the at least a second monomer having the general formula **II.** More preferably, the at least one alcohol is present in the reaction mixture in an amount 5 to 25% by weight the at least one monomer of the general formula **I** and the at least a second monomer having the general formula **II.**

It should be appreciated by one skilled in the art that the above mentioned preferred features with respect to the R¹O- removal agent similarly apply to the optional R⁸O-removal agent.

Preferably, step (i) takes place at a temperature between 0°C and 90°C. More preferably, step (i) takes place at a temperature between 10°C and 60°C. Most preferably, step (i) takes place at a temperature between 20°C and 50°C.

Preferably, the reaction of step (ii) takes place at a temperature between 0°C and 90°C. More preferably, the reaction takes place at a temperature between 10°C and 60°C. Most preferably, the reaction takes place at a temperature between 20°C and 50°C. Preferably, the reaction is catalysed.

Preferably, the catalyst comprises any suitable catalyst. Preferably the catalyst comprises a transition metal or group 14 or 15 chelate compound. Preferably, the catalyst comprises a transition metal or group 14 or 15 organic chelate compound. Preferably, the catalyst comprises a transition metal or group 14 or 15 alkoxy chelate compound. Preferably the catalyst is water soluble. More preferably, the catalyst comprises a transition metal or group 14 or 15 poly-alkoxy chelate compound. The catalyst may be stabilised by an alkanolamine derivative. Preferably, the catalyst is selected from compounds of any of the following: titanium, zirconium, hafnium, tin, antimony or germanium. In a particularly preferred embodiment, the catalyst comprises a water soluble alkoxy titanate, zirconate or stannate compound stabilised by an alkanolamine derivative. Most preferably, the catalyst comprises an alkoxy titanate compound.

Examples of suitable catalysts include TYZOR (RTM), commercially available from DuPont, and VERTEC (RTM), commercially available from Johnson Matthey.

Preferably, the reaction takes place at a suitable pH in a range to suit the stability of the binder.

Preferably, the reaction takes place in the presence of a pH adjuster operable to adjust the pH of the reaction mixture. Preferably, the pH adjuster comprises at least one acid.

Preferably, the pH adjuster is present in the reaction in an amount sufficient to adjust the pH of the reaction mixture to between 6 and 1, more preferably, between 5 and 1, and most preferably, between 4 and 1.5.

In one embodiment, the pH adjuster may comprise the acid R³³COOH generated during the reaction.

Alternatively or additionally, the pH adjuster may comprise the acid R³⁴COOH generated during the reaction.

Preferably, the at least one acid is any suitable organic or inorganic acid. Preferably, the at least one acid has a pKa in aqueous solution at 298K of less than 5, more preferably, less than 4.

Preferably, the pH adjuster is a strong BrØensted acid. By strong BrØensted acid it is meant a BrØensted acid having a pKa (in aqueous solution at 298K) between -12 and -5, and preferably between -10 and -6.

Alternatively or additionally, the pH adjuster may be a weak BrØensted acid. By weak BrØensted acid it is meant a BrØensted acid having a pKa (in aqueous solution at 298K) between -5 and +10, and preferably between +3 and +5.

Preferably, the at least one acid is water soluble.

Examples of suitable at least one acids include but are not restricted to any of the following, alone or in combination: formic, acetic, propionic, butyric, oxalic, malonic, succinic, glutaric, adipic, citric, hydrochloric, sulphuric, phosphoric, nitric, boric, trifluoroacetic, methanesulfonic, trifluoro methanesulfonic acid.

The at least one acid may alternatively or additionally comprise at least one water stable Lewis acid. Examples of suitable Lewis acids include but are not restricted to LiCl, FeCl₃, ZnCl₂, CaCl₂ and the like.

The components of the first aspect of the invention may be contacted in any order. For instance, the at least one acid may be firstly introduced to the silanes and then later to the water or the water/at least one alcohol mixture or, alternatively, the silanes, the at least one acid and the water or water/at least one alcohol mixture may all be introduced at the same time. Beneficial results may be achieved by adding different amounts of the at least one acid at different stages of the polymerization reaction.

Additives or stabilising agents may also be introduced during the preparation of the binder. Examples of such include but are not restricted to colloidal silica, silica sols, antifoaming agents or buffers.

One embodiment of the method includes adding the R¹O-removal agent to the other ingredients. In an alternate embodiment, the silanes and other agents, if any, are added to the R¹O- removal agent. In a further alternate embodiment, a fraction of the ingredients are mixed with the R¹O- removal agent and then added to the rest of the ingredients.

The removal of alcohol, R³³COOH, R³⁴COOH and/or water may be performed at atmospheric pressure or under vacuum. The removal may start during the mixing stage as well as after completion of hydrolysis of the silanes. The evolution of hydrolysis of silanes may be followed by any conventional analytical method such as gas chromatography, infra-red spectroscopy, Raman spectroscopy or nuclear magnetic resonance.

The amount of removed alcohol, R³³COOH, R³⁴COOH and/or water may be determined by any suitable analytical method.

The amount of R¹O- and, optionally, R⁸O- removal agent used in the polymerization reaction may be adjusted in order to reach a desired final solids amount after the distillation process. The weight of the alcohols may be replaced by the same weight in R¹O- or, optionally, R⁸O-removal agent during the process or, preferably, substantially after completion of the process.

The paint may be any water based silicone decorative or protective paint such as water repellent, dirt repellent paint for concrete and facades, impregnation agents for indoor or outdoor walls, water repellent agents for textiles.

Preferably, the paint is an anticorrosion paint. Preferably, the paint is a primer, more preferably a shop primer. In an especially preferred embodiment, the paint is a weldable shop primer.

The paint composition may be a two component paint composition.

The two component paint composition may further comprise one or more of the following in either component: non conductive pigments, thickeners, rheological additives, colloidal silica, coated colloidal silica and/or at least one silica sol. Preferably, the first component further comprises one or more of the following: non-conductive pigments, thickeners, rheological additives, colloidal silica, coated colloidal silica or silica sol.

Examples of suitable non conductive pigments include titanium dioxide, red iron oxide, calcium carbonate, talc, aluminium silicate and yellow iron oxide.

Preferably, the two component paint composition comprises at least one filler. Preferably, the second component is a powder. Preferably, the at least one filler is present in the second component, preferably in an amount between 1 and 99% of the dry weight of the second component. More preferably, the at least one filler is present in the second component in an amount between 20 and 80% of the dry weight of the second component. More preferably, the at least one filler is present in the second component in an amount between 30 and 60% of the dry weight of the second component. Most preferably, the at least one filler is present in the second component in an amount between 40 and 50% of the dry weight of the second component.

Preferably, the at least one filler comprises a mineral filler.

Preferably, the at least one filler comprises one or more of the following: iron oxides (other than micaceous iron oxide); natural and precipitated barium sulphate, barytes, blanc fixe; aluminium silicate, kaolin, kaolinite, china clay; magnesium silicate and magnesium hydrosilicate, mica, talc, chlorite, tremolite; silica, surface treated silica, amorphous quartz, crystalline quartz, fumed silica; aluminium oxide and hydrate, bauxite, calcined bauxite; calcium magnesium carbonate, dolomite; natural and precipitated calcium carbonate; aluminium silicates, feldspar; nepheline syenite; calcium silicates, wollasionite; zinc oxide; zinc phosphate; graphite; bismuth vanadate; lead chromate; silicium carbide; zeolites; pyrophyllite; glass flakes; iron phosphide; nickel phosphide; hollow spheres; and aluminium. Also possible are other families of sulphates, carbonates, silicates, oxides and vanadates.

Preferably, the second component comprises zinc. Preferably, the zinc is present as finely divided zinc, zinc flake, zinc powder or zinc dust. Preferably, the zinc is present in the second component in an amount 1 to 99% of the dry weight of the second component. More preferably, the zinc is present in the second component in an amount 20 to 80% of the dry weight of the second component. More preferably, the zinc is present in the second component in an amount 30 to 60% of the dry weight of the second component. Most preferably, the zinc is present in the second component in an amount 40 to 50% of the dry weight of the second component.

Preferably, the two component paint composition comprises a colour pigment. Preferably, the colour pigment is present in either the first or second component in an amount 0.1 to 50% of the dry weight of whichever component it is present in. More preferably, the colour pigment is present in either the first or second component in an amount 1 to 15% of the dry weight of whichever component it is present in.

Preferably, the second component comprises a conductive pigment. Conductive pigments are known to improve both anti corrosive properties (by electrically connecting zinc particles with the substrate) and arc welding properties. Preferably, the conductive pigment is selected from micaceous iron oxide, ferro alloy, di-iron phosphide, copper flakes, nickel flakes stainless steel flakes, aluminium flakes and the like. Preferably, the conductive pigment is present in the second component in an amount 60 to 20% of the dry weight of the second component. More preferably, the conductive pigment is present in the second component in an amount 40 to 25% of the dry weight of the second component.

Optionally, the two component paint composition may further comprise suitable additives such as anti-settling, defoamers, thickening agents, rust inhibitor or wetting agents.

Typical thickening agents are acrylate polymers or hydroxyethyl cellulose polymers; when used they are preferably added in an amount up to 2% w/w of the dry weight of the two component paint composition, more preferably, up to 1% w/w of the dry weight of the two component paint composition. Typical anti settling agents are clay type materials like bentonite, glycerol trihydroxystearate, polyamides or polyethylene wax; when used they are preferably added in an amount up to 4% w/w of the dry weight of the two component paint composition, more preferably up to 2% w/w of the dry weight of the two component paint composition. Typical wetting agents are ethoxylated alcohols (e.g. the product with CAS RN=68439-45-2).

Optionally, the two component paint composition may further comprise suitable anti-corrosive pigments, such as molybdates, phosphates, borates or zinc oxide.

Optionally, the two component paint composition may further comprise suitable catalysts. Preferably, the catalyst comprises a transition metal or group 14 or 15 chelate compound. Preferably, the catalyst comprises a transition metal or group 14 or 15 organic chelate compound. Preferably, the catalyst comprises a transition metal or group 14 or 15 alkoxy chelate compound. Preferably the catalyst is water soluble. More preferably, the catalyst comprises a transition metal or group 14 or 15 poly-alkoxy chelate compound. The catalyst may be stabilised by an alkanolamine derivative. Preferably, the catalyst is selected from compounds of any of the following: titanium, zirconium, hafnium, tin, antimony or germanium. In a particularly preferred embodiment, the catalyst comprises a water soluble alkoxy titanate, zirconate or stannate compound stabilised by an alkanolamine derivative. Most preferably, the catalyst comprises an alkoxy titanate compound.

Examples of suitable catalysts include but are not restricted to TYZOR LA (RTM), commercially available from DuPont, or VERTEC XL175 (RTM), commercially available from Johnson Matthey.

Preferably, the mixing ratio, by weight of the components, between the first and the second component lies between 1:20 and 1:0.05, more preferably, between 1:10 and 1:0.1, most preferably, between 1:2 and 1:0.1.

The two components of the two component paint composition are preferably introduced to each other substantially immediately prior to application of the paint composition to the substrate; preferably, less than 2 hours before application, more preferably, less than 1 hour before application, most preferably, less than 30 minutes before application. The two components are preferably mixed together prior to use.

Preferably, the percentage w/w solids of the two component paint composition are between 70% and 10%, more preferably, between 40% and 20%, and most preferably between 35% and 25%.

Preferably, after the two part paint composition is applied to a substrate it cures to form a dry film. Preferably, zinc dust is present in the dry film between 80% and 1%, more preferably between 60% and 20%, and most preferably between 50% and 30% by weight of the dry film.

All of the features disclosed herein may be combined with any of the above aspects and in any combination.

### Examples

### Preparative Example 1 (Silane A):

### Preparation of Silane A N-[3-(triethoxysilyl)propyl]-formamide (CAS RN:[76524-94-2]):

553.4 g of 3-(triethoxysilyl)propyl]-amine and 277.8 g of ethyl formate are allow to react at room temperature for 18h, excess of ethyl formate and ethanol is then evaporated under *vacuum* to furnish Silane-A.

### Preparative Example 2 (Silane B):

### Preparation of Silane B (N-[2-(formylamino)ethyl]-N-[3-(trimethoxysilyl)propyl]-formamide) (CAS RN:[112119-91-2]):

50 g of N-[2-(formylamino)ethyl]-N-[3-(trimethoxysilyl)propyl]amine and 50 g of ethyl formate are heated at a temperature of 78°C for 2h, excess of ethyl formate and ethanol is then evaporated under *vacuum* to furnish Silane-B.

### Preparative Example 3 (Binder 1)

35.8 g of Silane-A, prepared as described in Preparative Example 1, 35.5 g of 3-glycidyloxypropyl trimethoxysilane, 108.3 g of tetraethylsilicate and 1.75 g of formic acid are stirred. 478.9 g of water is then drop wise added during a period of 45 min while the temperature is maintained below 35°C. At the end of the addition, the temperature is raised to 50°C for 15 min and is then raised until distillation of the mixture of methanol and ethanol, the distillation is stopped when the temperature of the reactor reaches 100°C. For indication, a volume of c.a. 190 ml is collected in the distillation trap leading to a weight solids of Binder 1 of c.a. 16.2%.

### Preparative Example 4 (Binder 2)

47.8 g of Silane-B, prepared as described in Preparative Example 2, 42.3 g of 3-glycidyloxypropyl trimethoxysilane, 129.2 g of tetraethylsilicate and 2.0 g of formic acid are stirred. 2.2 g of conc. Sulphuric acid in 660.8 g of water is then drop wise added during a period of 45 min while the temperature is maintained below 35°C. At the end of the addition, the temperature is raised to 50°C for 1h 15 min and is then raised until distillation of the mixture of methanol and ethanol, the distillation is stopped when the temperature of the reactor reaches 100°C. For indication, a volume of c.a. 240 ml is collected in the distillation trap leading to a weight solids of Binder 2 of c.a. 16.9%.

### Preparative Example 5 (Binder 3)

40.06 g of Silane-B, prepared as described in Preparative Example 2, 35.45 g of 3-glycidyloxypropyl trimethoxysilane, 108.33 g of tetraethylsilicate are stirred. 1.86 g of conc. Sulphuric acid in 553.9 g of water is then drop wise added during a period of 45 min while the temperature is maintained below 38°C. At the end of the addition, the temperature is raised to 50°C for 20 min and is then raised until distillation of the mixture of methanol and ethanol, the distillation is stopped when the temperature of the reactor reaches 100°C. For indication, a volume of c.a. 200 ml is collected in the distillation trap leading to a weight solids of Binder 3 of c.a. 16.0%.

### Comparative Example 1 (Binder 4)

1071.4 g of 3-(triethoxysilyl)propyl]-amine, 295.9 g of methyl triethoxysilane are stirred. 2180 g of water is then drop wise added during a period of 1h 15 min while the temperature is maintained below 44°C. At the end of the addition, the temperature is raised to 60°C for 20 min and is then raised until distillation of the mixture of ethanol, the distillation is stopped when the temperature of the reactor reaches 100°C. For indication, a volume of c.a. 1600 ml is collected in the distillation trap leading to a weight solids of Binder 4 of c.a. 30.7%.

The following examples are of shop primer formulations:

**Table I**

| | Binder wt% | Fillers wt% | Zinc dust wt% |
|---|---|---|---|
| Example 1 | Binder 1 59.6 | Sikron M500 21 | 19.4 |
| Example 2 | Binder 2 59.6 | Sikron M500 20.3 | 20.3 |
| Example 3 | Binder 3 50.8 | Sikron M500 26.5 | 22.7 |
| Comparative example 1 | Binder 4 37.0 | Zinc oxide/Bayferrox 130BM/Miox 7.6/7.6/22.6 | 25.2 |

Sikron M500 (RTM) is commercially available from Sibelco, Bayferrox 130 BM (RTM) is commercially available from Bayer, and Miox is a generic abbreviation for Micaceous Iron Oxide available from Kärtner.

The shop primers as disclosed in Table I were then overcoated and subjected to a 6 week immersion test. A visual inspection of the examples was then carried out, the results of which are shown in Table II:

**Table II**

| | Curing | 6 weeks immersion test after overcoating |
|---|---|---|
| Example 1 | Within 24 hours | Good |
| Example 2 | Within 24 hours | Good |
| Example 3 | Within 24 hours | Good |
| Comparative example 1 | Within 24 hours | Poor |

### General procedure for the preparation of preparative examples 6-16 (preparation of binders 5-15):

Silane A or Silane B (prepared as described above) 3-glycidyloxypropyl trimethoxysilane and tetraethylsilicate are stirred at room temperature. A water solution containing the acid(s) followed by the silica sol (Bindzil® CC30, Eka Chemicals AB) is added to the stirred silane mixture during 30 min while the temperature of the reactor is maintained below 32°C. At the end of the addition the temperature is raised over a period of c.a. 100 min until distillation of the released alcohols starts. At that time the temperature is stepwise raised to maintain a continuous distillation during typically 2 hours. The amounts of components added are displayed in **Table III,** which displays the relative weights of the components in grams.

**Table III**

| Prep Ex# | Binder # | Silane A* | Silane B** | Epoxy silane | tetraethyl silicate | HCOOH | H₂SO₄ | Silica sol | H₂O | Final solid contents (%) | Final pH |
|---|---|---|---|---|---|---|---|---|---|---|---|
| | | | | | | | | | | | |
| 6 | 5 | 51.98 | - | 51.98 | 103.9 | 2.1 | - | - | 609.8 | 16.9 | 2.71 |
| 7 | 6 | 53.9 | - | 53.9 | 107.8 | 2.2 | 2.2 | - | 646.2 | 17.1 | 1.66 |
| 8 | 7 | 51.9 | - | 51.9 | 103.9 | - | 2.1 | - | 609.8 | 17.4 | 1.57 |
| 9 | 8 | - | 150.2 | 132.9 | 406.2 | 6.59 | - | - | 2077.1 | 16.5 | 3.82 |
| 10 | 9 | 52.4 | - | 52.4 | 104.8 | 2.3 | - | 17.9 | 643.2 | 15.5 | 2.79 |
| 11 | 10 | 51.8 | - | 51.8 | 103.2 | 2.3 | 2.3 | 17.9 | 650.7 | 15.6 | 1.69 |
| 12 | 11 | 52.4 | - | 52.4 | 104.8 | - | 2.3 | 17.9 | 643.2 | 15.9 | 1.71 |
| 13 | 12 | 22.4 | - | 23.6 | 74.9 | - | 4.9 | 10.6 | 353.2 | 16.9 | 0.9 |
| 14 | 13 | - | 46.4 | 41.8 | 125.5 | 2.1 | - | 8.5 | 691.8 | 15.8 | 4.11 |
| 15 | 14 | - | 45.9 | 40.6 | 124.2 | 2.1 | 2.2 | 8.5 | 699.1 | 15.2 | 2.31 |
| 16 | 15 | - | 46.2 | 41.8 | 125.5 | - | 2.2 | 8.5 | 692.5 | 16.6 | 2.28 |

| | | | | | | | | | | | |
|---|---|---|---|---|---|---|---|---|---|---|---|
| *: Prepared as described in Preparative Example 1 **: Prepared as described in Preparative Example 2 | | | | | | | | | | | |

Preparative examples 17 and 18 disclose the preparation of binders 16 and 17 in which the released alcohol is not removed.Preparative Example 17 (Binder 16):

25 g of Silane A, prepared as described in Preparative Example 1, 25 g of 3-glycidyloxypropyl trimethoxysilane and 75 g tetraethylsilicate are stirred at room temperature. 1.25 g of formic acid in 294.5 g of water is added to the stirred silane mixture during 30 min while the temperature of the reactor is maintained below 32°C.

### Preparative Example 18 (Binder 17):

25 g of Silane B, prepared as described in Preparative Example 2, 25 g of 3-glycidyloxypropyl trimethoxysilane and 75 g tetraethylsilicate are stirred at room temperature. 1.25 g of formic acid and in 294.5 g of water is added to the stirred silane mixture during 30 min while the temperature of the reactor is maintained below 32°C.

**Table IV** discloses the ingredients and relative amounts of paint examples 4 to 9 and comparative example 2.

**Table IV**

| Example | Binder#* | Binder weight* | Westmin D30E* | Talc de Luzenac 10MO* | Zinc dust Larvik* | Zinc oxide* |
|---|---|---|---|---|---|---|
| 4 | 16 | 51 | 26.5 | - | 22.5 | - |
| 5 | 17 | 51 | - | 26.5 | 22.5 | - |
| 6 | 2 | 51 | - | 26.5 | 22.5 | - |
| 7 | 14 | 51 | 26.5 | - | 22.5 | - |
| 8 | 12 | 51 | 26.5 | - | 22.5 | - |
| 9 | 12 | 51 | 21.5 | - | 22.5 | 5 |
| Comparative Example 2 | 4 | 51 | - | 26.5 | 22.5 | |

| | | | | | | |
|---|---|---|---|---|---|---|
| *Relative weights in grams | | | | | | |

The paint and film properties are disclosed in **Table V:**

**Table V**

| Example | Water double rubs after 24 hours | Pot life (hours) * | stable reactivity (months) ** |
|---|---|---|---|
| 4 | > 200 | 4 | 1 |
| 5 | > 200 | 4 | 1 |
| 6 | > 200 | 2.5 | 2 |
| 7 | > 200 | 4.5 | 4 |
| 8 | > 200 | 2 | > 12 |
| 9 | > 200 | 2 | > 12 |
| Comp Ex 2 | > 200 | 1 | >24 |

| | | | |
|---|---|---|---|
| *: The pot life represents the time during which the viscosity remains low enough to allow application by the means of airless spraying. **: The stable reactivity represents the interval during which the binders show no decrease of reactivity during curing. | | | |

The blistering was determined as follows:
Panels coated with formulations made according to the examples were over coated with a suitable marine epoxy topcoat like SigmaPrime available from Sigma. After 6 weeks of exposure in humidity cabinet (40°C, 100% RH), the blistering is identified according to ASTM D 714.

(10 = no blisters, 0 = biggest blisters, D = Dense, F = few) .

All formulations based on Examples made according to the invention show no (or few) blistering. Comparative examples 1 and 2 show excessive blistering.

To see the differences of water sensitivity of the different binders based on formylated amine, the formulations are over coated with a more water sensitive top coat, a waterborne epoxy called: Aquacover 200 and 400 system (Comercially available from SigmaCoatings BV). The results are disclosed in Table VI.

**Table VI (overcoated with Aquacover 200/400).**

| Example | Blistering after 6 weeks hum.cab |
|---|---|
| 4 | 10 |
| 5 | 8D |
| 6 | 8D |
| 7 | 8D |
| 8 | 10 |
| 9 | 10 |
| Comp Ex 2 | 0D |
| SigmaWeld MC | 8F |

### Explanations of the results:

The difference in blistering between overcoated binders of the invention and comparative binders are shown in **Table VI**. The binders made in accordance with the invention show little or no blistering when overcoated, whereas the overcoated comparative example shows large, dense blistering.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of preparing an aqueous oligomeric or polymeric compound comprising the steps of:
i) contacting at least one monomer of the general formula **I**:
(R¹O-)ₘSi(-R^{X}-NR²R³)₄₋ₘ I
where each R¹ group is independently selected from hydrogen, alkyl, alkenyl, alkynyl, aralkyl, aryl or-(C=O)R³³ group;
each R³³ group is independently selected from hydrogen or any alkyl, alkenyl, alkynyl, aralkyl or aryl group,
each R² group is independently selected from hydrogen, alkyl, alkenyl, alkynyl, aralkyl, aryl, R^{Z} or -R^{Y}-NR^{V}R^{W} group;
each R³ group is independently selected from hydrogen, alkyl, alkenyl, alkynyl, aralkyl, aryl, R^{Z} or -R^{Y}-NR^{V}R^{W} group;
each R^{X} group is a bivalent organic bridging group,
and wherein each R^{Y} group is defined as for R^{X} above,
each R^{V} group is defined as for R² above,
each R^{W} group is defined as for R³ above,
wherein R² and/or R³ may independently be the group -R^{y}-NR^{v}R^{w} and each R^{V} and/or R^{W} can then itself independently be -R^{Y}-NR^{V}R^{W}, the -R^{Y}-NR^{V}R^{W} group being repeated no more than six times between the silicon radical of general formula I and each terminal -R^{Y}-NR^{V}R^{W} group, wherein a terminal group is defined as R², R³, R^{V} or R^{W} being selected from hydrogen, alkyl, alkenyl, alkynyl, aryl, aralkyl or an R^{Z} group;
R^{Z} is -(C=O)R⁴ or - (C=O)-OR⁵,
where each R⁴ group is independently selected from hydrogen or any alkyl, alkenyl, alkynyl, aralkyl, or aryl group,
each R⁵ group is independently selected from any alkyl, alkenyl, alkynyl, aralkyl or aryl group,
wherein when R² or R^{V} is R^{Z} and R² or R^{V} is -(C=O)R⁴, R² and R³ or R^{V} and R^{W} may together form a cyclic group such that the groups -NR²R³ or -NR^{V}R^{W} may each independently be represented by the formula **VI:** 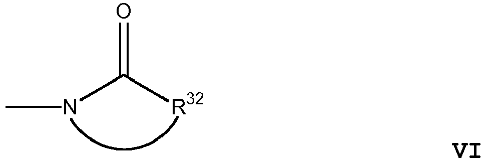
where R³² is defined as for R^{X} above, wherein R⁴ is a fragment of R³² and wherein R³ or R^{Y} are selected from alkylene, alkenylene, alkynylene, aralkylene or arylene and form the remainder of the R³² fragment,
m = 1 to 3,
wherein at least one nitrogen radical within the group-NR²R³ is directly bonded to an R^{Z} group,
and, optionally, at least a second monomer having the general formula **II**:
(R⁸O-)_{q}Si(-R⁹)_{4-q} **II**
where each R⁸ is independently selected from hydrogen or any alkyl, alkenyl, alkynyl, aralkyl, aryl or -(C=O)R³⁴ group, where R³⁴ is defined as for R³³ above,
each R⁹ is independently selected from hydrogen or any alkyl, alkenyl, alkynyl, aralkyl or aryl group
and q = 1 to 4,
with an R¹O- removal agent and optionally an -R⁸O removal agent, the R¹O removal agent comprising water; and
ii) reacting the components in (i) to form an oligomer or polymer; and
iii) removing released alcohol, R³³COOH, R³⁴COOH and/or water.

2. A method according to claim 1, wherein the reaction takes place in the presence of a pH adjuster operable to adjust the pH of the reaction mixture to between 6 and 1.

3. A method according to claim 2, wherein the pH adjuster comprises the acid R³³COOH or R³⁴COOH generated during the reaction.

4. A method according to any preceding claim, wherein each R^{Z} group is independently selected from -(C=O)CH₃,-(C=O)CH₂CH₃, -(C=O)CH₂CH₂CH₃, -(C=O)CH(CH₃)CH₃,-(C=O)CH₂CH(CH₃)CH₃, -(C=O)C(CH₃)₃, -(C=O)-OCH₃, -(C=O)-OCH₂CH₃, -(C=O)-OCH(CH₃)CH₃, -(C=O)-OCH₂CH(CH₃)CH₃, -(C=O)-OC(CH₃)₃.

5. A method according to any preceding claim, wherein the oligomeric or polymeric substance is derived from at least one monomer of the general formula **I** wherein the at least one monomer of general formula **I** is at least 10% by weight of the total monomer used to produce the polymer.

6. A method according to any preceding claim, wherein the oligomeric or polymeric substance is further formed from 0.1 to 99% (by weight of the total monomer used to produce the oligomeric or polymeric substance) of at least one monomer of general formula **II.**

7. Use of an aqueous oligomeric or polymeric compound as prepared by the method of any of claims 1 to 6 in an aqueous paint binder composition.

8. Use according to claim 7, wherein the oligomeric or polymeric substance is present in the aqueous binder between 99% and 1% by dry weight of the binder composition.

## Patentansprüche

1. Verfahren zum Herstellen einer wässrigen oligomeren oder polymeren Verbindung, umfassend die Schritte:
i) Inkontaktbringen mindestens eines Monomers mit der allgemeinen Formel **I**:
(R¹O-)ₘSi(-R^{x}-NR²R³)₄₋ₘ I,
wobei jede R¹-Gruppe unabhängig ausgewählt ist aus Wasserstoff, einer Alkyl-, Alkenyl-, Alkinyl-, Aralkyl-, Aryl- oder -(C=O)R³³-Gruppe;
jede R³³-Gruppe unabhängig ausgewählt ist aus Wasserstoff oder einer beliebigen Alkyl-, Alkenyl-, Alkinyl-, Aralkyl- oder Aryl-Gruppe;
jede R²-Gruppe unabhängig ausgewählt ist aus Wasserstoff, einer Alkyl-, Alkenyl-, Alkinyl-, Aralkyl-, Aryl-, R^{Z}- oder -R^{Y}-NR^{V}R^{W}-Gruppe;
jede R³-Gruppe unabhängig ausgewählt ist aus Wasserstoff, einer Alkyl-, Alkenyl-, Alkinyl-, Aralkyl-, Aryl-, R^{Z}- oder R^{Z}- oder -NR^{V}R^{W}-Gruppe;
jede R^{x}-Gruppe für eine zweiwertige organische Verbrückungsgruppe steht,
und wobei jede R^{Y}-Gruppe der obigen Definition für R^{x} entspricht,
jede R^{V}-Gruppe der obigen Definition für R² entspricht, jede R^{W}-Gruppe der obigen Definition für R³ entspricht,
wobei R² und/oder R³ unabhängig für die Gruppe -R^{Y}-NR^{V}R^{W} stehen kann/können und jedes R^{V} und/oder R^{W} dann selbst unabhängig für -R^{Y}-NR^{V}R^{W} stehen kann/können, wobei die-R^{Y}-NR^{V}R^{W}-Gruppe höchstens sechsmal zwischen dem Siliciumradikal mit der allgemeinen Formel I und jeder endständigen -R^{Y}-NR^{V}R^{W}-Gruppe wiederholt werden kann, wobei eine endständige Gruppe als R², R³, R^{V} oder R^{W} definiert sein kann, das ausgewählt ist aus Wasserstoff, einer Alkyl-, Alkenyl-, Alkinyl-, Aryl-, Aralkyl- oder R^{Z}-Gruppe;
R^{Z} für -(C=O)R⁴ oder -(C=O)-OR⁵ steht,
wobei jede R⁴-Gruppe unabhängig ausgewählt ist aus Wasserstoff oder einer beliebigen Alkyl-, Alkenyl-, Alkinyl-, Aralkyl- oder Aryl-Gruppe,
jede R⁵-Gruppe unabhängig ausgewählt ist aus einer beliebigen Alkyl-, Alkenyl-, Alkinyl-, Aralkyl- oder Aryl-Gruppe,
wobei, wenn R² oder R^{V} für R^{Z} steht und R² oder R^{V} für -(C=O)R⁴ steht, R² und R³ oder R^{V} und R^{W} zusammen eine cyclische Gruppe bilden können, sodass die Gruppen -NR²R³ oder -NR^{V}R^{W} jeweils unabhängig durch die Formel **VI** dargestellt sein können: 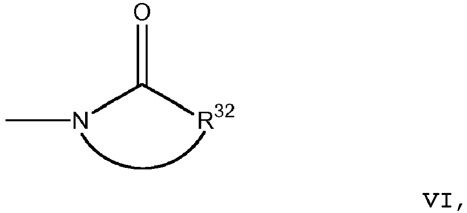
wobei R³² der obigen Definition für R^{x} entspricht, wobei R⁴ ein Fragment von R³² ist und wobei R³ oder R^{Y} ausgewählt sind aus Alkylen, Alkenylen, Alkinylen, Aralkylen oder Arylen und den Rest des R³²-Fragments bilden,
m = 1 bis 3,
wobei mindestens ein Stickstoffradikal in der Gruppe -NR²R³ direkt an eine R^{Z}-Gruppe gebunden ist,
und gegebenenfalls zumindest eines zweiten Monomers mit der allgemeinen Formel **II**:
(R⁸O-)_{q}Si(-R⁹)_{4-q} **II,**
wobei jedes R⁸ unabhängig ausgewählt ist aus Wasserstoff oder einer beliebigen Alkyl-, Alkenyl-, Alkinyl-, Aralkyl-, Aryl- oder -(C=O)R³⁴-Gruppe, wobei R³⁴ der obigen Definition für R³³ entspricht,
jedes R⁹ unabhängig ausgewählt ist aus Wasserstoff oder einer beliebigen Alkyl-, Alkenyl-, Alkinyl-, Aralkyl- oder Aryl-Gruppe
und q = 1 bis 4,
mit einem R¹O-Entfernungsmittel und gegebenenfalls einem -R⁸O-Entfernungsmittel, wobei das R¹O-Entfernungsmittel Wasser umfasst; und
ii) Umsetzen der Komponenten in (i), um ein Oligomer oder Polymer zu bilden; und
iii) Entfernen von freigesetztem Alkohol, R³³COOH, R³⁴COOH und/oder Wasser.

2. Verfahren nach Anspruch 1, wobei die Reaktion in Gegenwart eines pH-Wert-Einstellmittels abläuft, das dazu geeignet ist, den pH-Wert des Reaktionsgemischs auf zwischen 6 und 1 einzustellen.

3. Verfahren nach Anspruch 2, wobei das pH-Wert-Einstellmittel die Säure R³³COOH oder R³⁴COOH umfasst, die während der Reaktion erzeugt wird.

4. Verfahren nach einem der vorstehenden Ansprüche, wobei jede R^{Z}-Gruppe unabhängig ausgewählt ist aus-(C=O)CH₃, -(C=O)CH₂CH₃, -(C=O)CH₂CH₂CH₃, -(C=O)CH(CH₃)CH₃, (C=O)CH₂CH(CH₃)CH₃, -(C=O)C(CH₃)₃, -(C=O)-OCH₃, -(C=O)-OCH₂CH₃, -(C=O)-OCH(CH₃)CH₃, -(C=O)-OCH₂CH(CH₃)CH₃,-(C=O)-OC(CH₃)₃.

5. Verfahren nach einem der vorstehenden Ansprüche, wobei die oligomere oder polymere Substanz aus mindestens einem Monomer mit der allgemeinen Formel I gewonnen wird, wobei das mindestens eine Monomer mit der allgemeinen Formel I mindestens 10 Gew.-% des Gesamtmonomers ausmacht, das zur Herstellung des Polymers verwendet wird.

6. Verfahren nach einem der vorstehenden Ansprüche, wobei die oligomere oder polymere Substanz ferner zu 0,1 bis 99 Gew.-% (bezogen auf das Gewicht des Gesamtmonomers, das verwendet wird, um die oligomere oder polymere Substanz herzustellen) aus mindestens einem Monomer mit der allgemeinen Formel II gebildet wird.

7. Verwendung einer wässrigen oligomeren oder polymeren Verbindung, die gemäß dem Verfahren nach einem der Ansprüche 1 bis 6 hergestellt wurde, in einer wässrigen Farbbindemittelzusammensetzung.

8. Verwendung nach Anspruch 7, wobei die oligomere oder polymere Substanz in dem wässrigen Bindemittel zu zwischen 99 Gew.-% und 1 Gew.-%, bezogen auf das Trockengewicht der Bindemittelzusammensetzung, vorhanden ist.

## Revendications

1. Procédé de préparation d'un composé oligomère ou polymère aqueux comprenant les étapes de :
i) mise en contact d'au moins un monomère de formule générale I :
(R¹O⁻)ₘSi(-R^{X}-NR²R³)₄₋ₘ I
où chaque groupe R¹ est indépendamment choisi parmi hydrogène ou un groupe alkyle, alcényle, alcynyle, aralkyle, aryle ou (C=O)R³³ ;
chaque groupe R³³ est indépendamment choisi parmi hydrogène ou un groupe alkyle, alcényle, alcynyle, aralkyle ou aryle quelconque,
chaque groupe R² est indépendamment choisi parmi hydrogène ou un groupe alkyle, alcényle, alcynyle, aralkyle, aryle, R^{Z} ou -R^{Y}-NR^{V}R^{W} ;
chaque groupe R³ est indépendamment choisi parmi hydrogène ou un groupe alkyle, alcényle, alcynyle, aralkyle, aryle, R^{Z} ou -R^{Y}-NR^{V}R^{W} ;
chaque groupe R^{X} est un groupe de pontage organique bivalent,
et dans lequel chaque groupe R^{Y} est défini comme pour R^{X} ci-dessus,
chaque groupe R^{V} est défini comme pour R² ci-dessus, chaque groupe R^{W} est défini comme pour R³ ci-dessus, dans lequel R² et/ou R³ peuvent indépendamment être le groupe -R^{Y}-NR^{V}R^{W} et chaque R^{V} et/ou R^{W} peut alors être lui-même, indépendamment, -R^{Y}-NR^{V}R^{W}, le groupe -R^{Y}-NR^{V}R^{W} étant répété pas plus de six fois entre le radical de silicium de formule générale I et chaque groupe -R^{Y}-NR^{V}R^{W} terminal, dans lequel un groupe terminal est défini par R², R³, R^{V} ou R^{W} étant choisi parmi hydrogène, alkyle, alcényle, alcynyle, aryle, aralkyle ou un groupe R^{Z} ;
R^{Z} est -(C=O)R⁴ ou -(C=O)-OR⁵,
où chaque groupe R⁴ est indépendamment choisi parmi hydrogène ou un groupe alkyle, alcényle, alcynyle, aralkyle ou aryle quelconque,
chaque groupe R⁵ est indépendamment choisi parmi un groupe alkyle, alcényle, alcynyle, aralkyle ou aryle quelconque, dans lequel, lorsque R² ou R^{V} est R^{Z} et R² ou R^{V} est -(C=O)R⁴, R² et R³ ou R^{V} et R^{W} peuvent former conjointement un groupe cyclique de sorte que les groupes -NR²R³ ou -NR^{V}R^{W} peuvent, chacun indépendamment, être représentés par la formule VI : 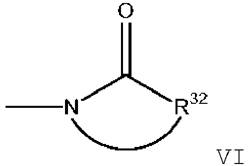
où R³² est défini comme pour R^{X} ci-dessus, dans lequel R⁴ est un fragment de R³² et dans lequel R³ ou R^{Y} sont choisis parmi alkylène, alcénylène, alcynylène, aralkylène ou arylène et forment le reste du fragment R³²,
m = 1 à 3,
dans lequel au moins un radical azote dans le groupe -NR²R³ est directement lié à un groupe R^{Z}, et, facultativement, au moins un deuxième monomère ayant la formule générale II :
(R⁸O-)_{q}Si(-R⁹)_{4-q} II
où chaque R⁸ est indépendamment choisi parmi hydrogène ou un groupe alkyle, alcényle, alcynyle, aralkyle, aryle ou -(C=O)R³⁴ quelconque, où R³⁴ est défini comme pour R³³ ci-dessus,
chaque R⁹ est indépendamment choisi parmi hydrogène ou un groupe alkyle, alcényle, alcynyle, aralkyle ou aryle quelconque
et q = 1 à 4,
avec un agent d'élimination de R¹O- et facultativement un agent d'élimination de -R⁸O, l'agent d'élimination de R¹O comprenant de l'eau ; et
ii) réaction des composants dans (i) pour former un oligomère ou un polymère ; et
iii) élimination de l'alcool, de R³³COOH, de R³⁴COOH et/ou de l'eau libérés.

2. Procédé selon la revendication 1, dans lequel la réaction est conduite en présence d'un agent d'ajustement du pH permettant d'ajuster le pH du mélange de réaction entre 6 et 1.

3. Procédé selon la revendication 2, dans lequel l'agent d'ajustement du pH comprend l'acide R³³COOH ou R³⁴COOH généré pendant la réaction.

4. Procédé selon l'une quelconque des revendications précédentes, dans lequel chaque groupe R^{Z} est indépendamment choisi parmi -(C=O)CH₃, -(C=O)CH₂CH₃, -(C=O)CH₂CH₂CH₃, -(C=O)CH(CH₃)CH₃, (C=O)CH₂CH (CH₃)CH₃, - (C=O)C (CH₃)₃, -(C=O)-OCH₃, -(C=O)-OCH₂CH₃, -(C=O)-OCH(CH₃)CH₃, -(C=O)-OCH₂CH(CH₃)CH₃, -(C=O)-OC (CH₃)₃.

5. Procédé selon l'une quelconque des revendications précédentes, dans lequel la substance oligomère ou polymère est dérivée d'au moins un monomère de formule générale I, dans lequel l'au moins un monomère de formule générale I est au moins 10 % en poids du monomère total utilisé pour produire le polymère.

6. Procédé selon l'une quelconque des revendications précédentes, dans lequel la substance oligomère ou polymère est en outre formée de 0,1 à 99 % (en poids du monomère total utilisé pour produire la substance oligomère ou polymère) d'au moins un monomère de formule générale II.

7. Utilisation d'un composé oligomère ou polymère aqueux tel que préparé par le procédé selon l'une quelconque des revendications 1 à 6 dans une composition de liant de peinture aqueuse.

8. Utilisation selon la revendication 7, dans laquelle la substance oligomère ou polymère est présente dans le liant aqueux entre 99 % et 1 % en poids sec de la composition de liant.
